# FASCICULE DE BREVET EUROPEEN

(11) **EP 0 596 786 B1**
(45) Date de publication et mention de la délivrance du brevet: **04.12.1996**
(21) Numéro de dépôt: 93402672.5
(22) Date de dépôt: 29.10.1993
(51) Int. Cl.: G21C 3/322, G21C 3/352

(54) **Grille d'espacement munie d'ailettes pour assemblage combustible nucléaire**
Mit Fahnen versehenes Abstandshaltergitter für Kernbrennstoffbündel
Spacer grid provided with vanes for nuclear fuel assembly

(30) Priorité: 02.11.1992 US 970760
(43) Date de publication de la demande: 11.05.1994
(73) Titulaire: B&W FUEL COMPANY, Lynchburg, VA 24506-0935 (US)
(72) Inventeur: Morgan, Charles D., c/o B&W Fuel Company, Lynchburg, VA 24506-0935 (US); Tucker, Jeffrey S., c/o B&W Fuel Company, Lynchburg, VA 24506-0935 (US); Farnsworth, David A., c/o B&W Fuel Company, Lynchburg, VA 24506-0935 (US); Aldrich, Michael E., c/o B&W Fuel Company, Lynchburg, VA 24506-0935 (US)
(74) Mandataire: Fort, Jacques

(56) Documents cités:
- EP-A- 0 261 544
- EP-A- 0 468 870
- US-A- 4 728 489

## Description

La présente invention concerne les grilles d'espacement pour assemblage combustible nucléaire, et notamment celles de ces grilles qui sont munies d'ailettes de mélange.

Les assemblages combustibles pour réacteur nucléaire comportent des crayons de combustible retenus en place aux noeuds d'un réseau régulier par des grilles d'espacement réparties le long des crayons. Ces grilles d'espacement, constituées de plaquettes de métal entrecroisées, délimitent une cellule individuelle pour chaque crayon.

Un même assemblage peut comporter des grilles appartenant à plusieurs types différents. En particulier, les crayons peuvent être supportés uniquement par une ou plusieurs des grilles de l'assemblage. D'autres grilles peuvent être prévues simplement pour entretoiser les crayons, c'est-à-dire les maintenir aux noeuds d'un réseau régulier. D'autres grilles encore peuvent avoir uniquement une fonction thermodynamique.

Certaines au moins des grilles comportent des ailettes de mélange du réfrigérant, destinées à provoquer des turbulences et un mélange du réfrigérant qui traverse les grilles et balaie les gaines des crayons. Les ailettes peuvent avoir des formes et des emplacements très divers. Il peut par exemple y avoir quatre ailettes par cellule, chacune des ailettes affectées à une cellule étant placée sur une plaquette à proximité de l'entrecroisement avec une autre plaquette (EP-A-0 261 544). Il peut également y avoir, pour chaque cellule, seulement deux ailettes diamétralement opposées portées par deux plaquettes parallèles et placées à proximité d'entrecroisements respectifs (EP-A-0 468 870, Framatome et al).

Les ailettes de ces grilles de l'art antérieur sont supérieures en saillie par rapport à un plan virtuel défini par les parties rectilignes des arêtes des plaquettes de la grille. En conséquence, certaines des ailettes de mélange peuvent être accidentellement déformées au cours de la fabrication de la grille ou d'un assemblage, avec deux conséquences néfastes. La déformation de l'ailette modifie son effet sur l'écoulement de réfrigérant et risque d'augmenter la perte de charge et de dégrader le flux thermique critique. Un risque d'endommagement de crayon et de rupture d'ailettes résulte du rapprochement de l'ailette et du crayon.

On connait également (US-A-4 728 489) une grille conforme au préambule de la revendication 1.

La présente invention vise à fournir une grille répondant mieux que celles antérieurement connues aux exigences de la pratique, notamment en ce qu'elle réduit dans une large mesure le risque de déformation accidentelle.

Dans ce but, l'invention propose notamment une grille d'espacement selon la revendication 1.

D'autres dispositions avantageuses sont définies par les revendications dépendantes.

L'invention sera mieux comprise à la lecture de la description qui suit d'un mode de réalisation et qui fait référence aux dessins qui l'accompagnent, dans lesquels :
- la figure 1 est une vue en perspective d'un fragment d'une grille d'espacement classique ;
- la figure 2 est une vue en perspective depuis le dessus, montrant un fragment de deux plaquettes utilisables pour la mise en oeuvre de l'invention ;
- la figure 3 est une vue de côté d'un fragment de plaquette destinée à une grille suivant l'invention ;
- la figure 4 est une vue de dessus d'un fragment de grille suivant l'invention, montrant uniquement des cellules destinées à recevoir des crayons.

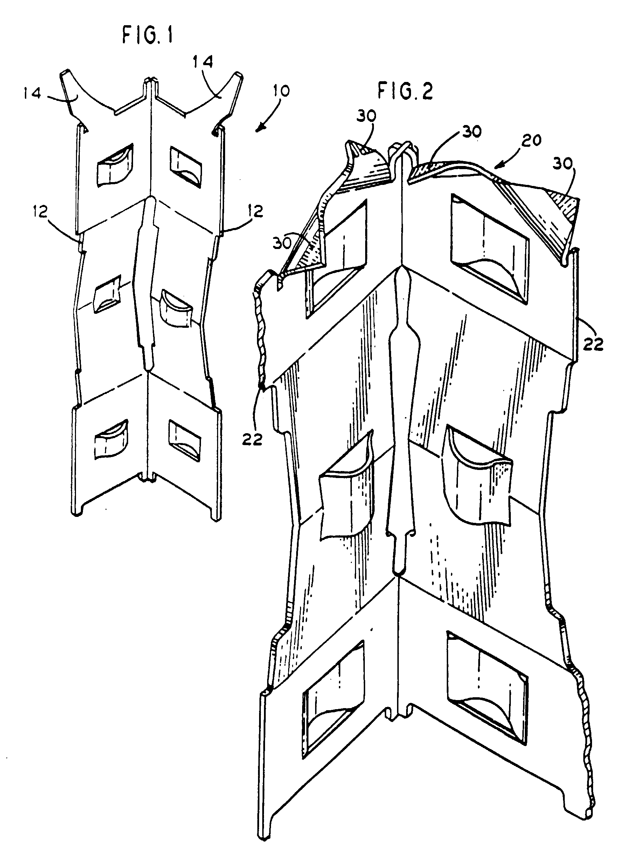

La figure 1 montre une fraction d'une grille d'espacement classique 10. Cette grille est constituée de deux jeux entrecroisés de plaquettes parallèles 12. Des saillies 14 s'étendent à partir de l'arête supérieure des plaquettes métalliques 12 de sorte que deux saillies 14 s'étendent au-dessus et au-delà de l'enveloppe générale des bandes vers le crayon (non représenté) placé dans chaque cellule individuelle destinée à recevoir un tel crayon. Cela rend les saillies 14, qui constituent des ailettes de mélange destinées à diriger l'écoulement de réfrigérant vers les crayons, plus susceptibles de se plier au cours de l'assemblage de la grille 10 et au cours du chargement des crayons dans la grille.

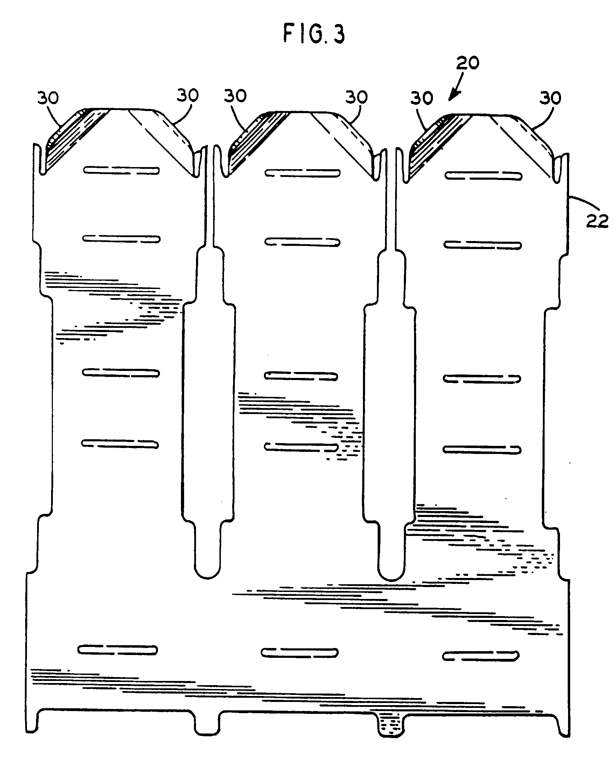

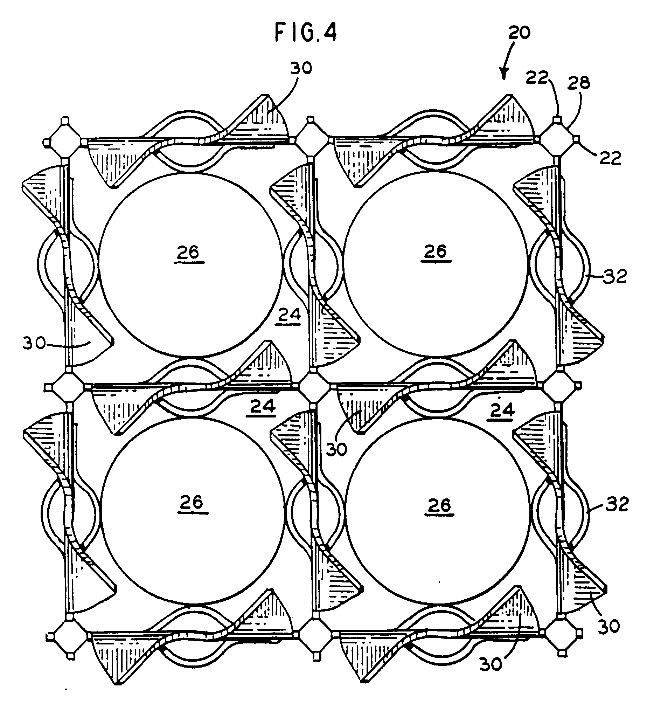

Un fragment de grille 20, suivant un mode de réalisation de l'invention, est illustré sur les figures 2, 3 et 4. Le fragment de grille 20 de la figure 4 est constitué de plusieurs plaquettes métalliques 22 entrecroisées et définissant plusieurs cellules individuelles 24 destinées chacune à recevoir un crayon de combustible unique 26. Pour plus de simplicité, quatre crayons seulement sont représentés. Les plaquettes 22 sont soudées ensemble en 28. Chaque plaquette est munie de plusieurs saillies (figure 2) qui s'étendent à partir d'une arête et constituent des ailettes 30. Dans le mode de réalisation illustré, ces ailettes 30 sont constituées par pliage alterné par rapport aux plaquettes 22 de façon à se trouver alternativement d'un côté et de l'autre des plaquettes 22. Dans un mode avantageux de réalisation, les ailettes font, à leur extrémité, un angle maximum par rapport au plan d'une plaquette qui est d'environ 90°. Cela facilite l'assemblage et le chargement des crayons 26. Si une ailette 30 est accidentellement déformée, elle s'éloigne du crayon 26, alors qu'elle se rapprocherait du crayon 26 dans le cas d'une grille classique 10 du genre montré en figure 1. Comme le montre la figure 3, la ligne de raccordement entre la base de l'ailette et la partie plane de la plaquette fait avantageusement un angle d'environ 45° avec la verticale. Il est cependant possible de s'écarter de cette valeur.

Comme le montre la figure 4, l'emplacement alterné des ailettes 30 sur chaque plaquette se traduit par la présence de quatre aillettes 30 par cellule individuelle lorsque les plaquettes 22 sont assemblées pour former des grilles.

Comme le montre la figure 3, un avantage du repliement des ailettes 30 est qu'elles restent à l'intérieur de l'enveloppe virtuelle de la grille 20. En d'autres termes, les ailettes 30 ne s'étendent pas, dans le sens vertical ou axial, au-delà de l'espace normalement occupé par les parties planes des plaquettes métalliques 22 lorsque la grille 20 est assemblée. Cette enveloppe passe également par les points des arêtes situés entre les ailettes. Cela réduit le risque que des ailettes 30 soient déformées ou rompues au cours de l'assemblage.

Au cours du fonctionnement normal en réacteur, les ailettes 30 dirigent l'écoulement de réfrigérant du centre de chaque canal d'écoulement vers des intervalles entre crayons à quatre emplacements dans chaque cellule individuelle 24. Cela augmente le flux thermique critique et la conduction de chaleur des crayons 26 vers le réfrigérant. En règle générale, le résultat sera au moins égal ou meilleur qu'avec les ailettes de mélange des grilles d'espacement classiques. Etant donné que les ailettes restent à l'intérieur de l'enveloppe virtuelle de la grille, la perte de charge totale subie par l'écoulement de réfrigérant est également réduite.

La grille montrée à titre d'exemple en figures 2 à 4 est destinée à entretoiser les crayons 26. Les plaquettes portent en conséquence des moyens destinés à venir s'appuyer sur les crayons, constitués par des bossettes ou, mieux, par des bandes découpées dans la paroi des ailettes et déformées, ménageant un passage pour l'écoulement longitudinal du réfrigérant. Il est également possible d'utiliser des bossettes de saillie suffisamment faible pour laisser un jeu radial au crayon, mais proportionnées à la saillie des ailettes 30 vers l'intérieur de la cellule de façon que le crayon vienne en contact avec les bossettes sans atteindre les ailettes en cas de vibration en flexion du crayon.

La disposition montrée en figure 4 correspond à des cellules occupées par des crayons. Dans le cas d'un assemblage ayant des tubes guides reliant deux embouts terminaux et portant les grilles, les ailettes qui feraient normalement saillie dans les cellules occupées par les tubes guides sont omises. La disposition peut également être différente de celle montrée en figure 4 pour les cellules de rive. En particulier, ces cellules peuvent être ouvertes vers l'extérieur et la longueur des plaquettes peut alors être telle que l'encombrement en plan de la grille soit inférieur à celui du polygone constituant l'enveloppe virtuelle des crayons. Cette dernière disposition est notamment utilisable dans le cas de grilles n'ayant qu'un effet thermodynamique (document EP-A-0 468 870, Framatome et al).

L'invention est susceptible de nombreuses autres variantes de réalisation.

En particulier, les ailettes peuvent avoir, avant pliage, une forme différente de celle qui a été représentée et décrite à titre d'exemple. Il peut y avoir un nombre d'ailettes par cellule inférieure à quatre, suivant l'enseignement du document EP-A-0 468 870 par exemple.

## Revendications

1. Grille d'espacement pour assemblage combustible nucléaire, comprenant au moins deux jeux de plaquettes (12) entrecroisées et fixées les unes aux autres à leurs croisement, définissant des cellules individuelles de réception d'un crayon de combustible et présentant des ailettes en saillie à partir d'au moins une arête de chacune des plaquettes, chaque ailette étant constituée par une saillie repliée en oblique et dirigée vers l'intérieur d'une cellule individuelle respective, caractérisée en ce que lesdites ailettes (30) ont une saillie à l'état avant pliage et un angle de pliage tels qu'elles soient contenues dans le sens axial, dans une enveloppe virtuelle de la grille, définie par les parties planes des plaquettes (22).

2. Grille selon la revendication 1, caractérisée en ce que les ailettes sont alternées sur chaque plaquette et situées chacune à proximité d'un croisement entre plaquettes (22), de sorte que quatre ailettes s'étendent vers l'intérieur des cellules individuelles recevant des crayons.

3. Grille selon la revendication 1 ou 2, caractérisée en ce que la partie terminale des ailettes (30) fait un angle d'environ 90° par rapport au plan des plaquettes (22).

4. Grille selon la revendication 1, 2 ou 3, caractérisée en ce que la ligne de raccordement de toutes les ailettes avec la partie plane des plaquettes fait un angle d'environ 45° avec la direction axiale.

5. Grille selon l'une quelconque des revendications précédentes, caractérisée en ce que les ailettes ont une section droite en quart de cercle en coupe dans un plan axial.

6. Grille selon l'une quelconque des revendications précédentes, caractérisée en ce que les plaquettes comportent des moyens (32) en saillie vers l'intérieur des cellules, dimensionnés de façon à interdire à un crayon (26) contenu dans la cellule de venir en contact avec une ailette (30).

7. Grille selon la revendication 6, caractérisé en ce que les moyens d'entretoisement sont en appui permanent sur les crayons (26).

## Patentansprüche

1. Abstandshaltergitter für eine Kernbrennstoffkassette mit wenigstens zwei Sätzen von gekreuzten und aneinander an ihren Kreuzungspunkten befestigten Platten (12), die einzelne Zellen zum Aufnehmen eines Brennstabs definieren und von wenigstens einer Kante einer jeden Platte abstehende Fahnen aufweisen, wobei jede Fahne durch einen schräg umgebogenen Vorsprung gebildet und jeweils ins Innere einer einzelnen Zelle gerichtet ist, **dadurch gekennzeichnet,** daß die Fahnen (30) einen solchen Vorsprung im Zustand vor dem Biegen und einen solchen Biegewinkel aufweisen, daß sie in axialer Richtung in einer durch die ebenen Bereiche der Platten (22) definierten, gedachten Hülle enthalten sind.

2. Gitter nach Anspruch 1, **dadurch gekennzeichnet,** daß die Fahnen an jeder Platte alternieren und jeweils in der Nähe eines Kreuzungspunkts zwischen Platten (22) angeordnet sind, so daß vier Fahnen sich ins Innere der Stäbe aufnehmenden einzelnen Zellen erstrecken.

3. Gitter nach Anspruch 1 oder 2, **dadurch gekennzeichnet,** daß der Endbereich der Fahnen (30) einen Winkel von ca. 90° gegen die Ebene der Platten (22) bildet.

4. Gitter nach Anspruch 1, 2 oder 3, **dadurch gekennzeichnet,** daß die Verbindungslinie aller Fahnen mit dem ebenen Bereich der Platten einen Winkel von ca. 45° zur Axialrichtung bildet.

5. Gitter nach einem der vorhergehenden Ansprüche, **dadurch gekennzeichnet**, daß die Fahnen im Schnitt in einer axialen Ebene einen viertelkreisförmigen Querschnitt haben.

6. Gitter nach einem der vorhergehenden Ansprüche, **dadurch gekennzeichnet,** daß die Platten ins Innere der Zellen vorspringende Mittel (32) aufweisen, die bemessen sind um zu verhindern, daß ein in der Zelle enthaltener Stab (26) in Kontakt mit einer Fahne (30) kommt.

7. Gitter nach Anspruch 6, **dadurch gekennzeichnet,** daß die Verstrebungsmittel dauernd auf die Stäbe (26) drücken.

## Claims

1. A spacer grid for a nuclear fuel assembly, comprising at least two sets of strips (22) which are mutually crossed and secured to each other at the crossing points, defining fuel rod receiving individual cells and provided with fins extending from at least one edge of each of the strips, each fin being constituted by a projection which is oblically folded toward the inside of the respective individual cell,
characterized in that said fins (30) have an amount of projection, when in the condition prior to folding, and a folding angle such that they are contained, in the axial direction, in a virtual envelope of the grid, defined by the planar portions of the strips (22).

2. A grid according to claim 1, characterized in that the fins are located in an alternating fashion on each strip and each close to a crossing between strips (22), whereby four fins extend into those individual cells which accomodate fuel rods.

3. A grid according to claim 1 or 2, characterized in that the end portions of the fins (30) are bent at approximately a 90 degree angle relative to the plane of the strips (22).

4. A grid according to claim 1, 2 or 3, characterized in that the merging line of all fins with the planar portion of the axial strips is at an angle of about 45 degree with the axial direction.

5. A grid according to any one of the preceding claims, characterized in that the fins have a cross-section which is a quarter of a circle in an axial plane.

6. A grid according to any one of the preceding claims, characterized in that the strips comprise means (32) projecting toward the inside of the cells, sized for preventing a rod (26) contained in the cell from contacting a fin (30).

7. A grid according to claim 6, characterized in that the abutment means are in continuous contact with the rods.
